# EUROPEAN PATENT SPECIFICATION

(11) **EP 4 382 883 B1**
(45) Date of publication and mention of the grant of the patent: **05.08.2026**
(21) Application number: 23213834.7
(22) Date of filing: 01.12.2023
(51) Int. Cl.: G01M 17/02

(54) **HYDROPLANING DETECTION METHOD AND SYSTEM**
AQUAPLANING-ERKENNUNGSVERFAHREN UND -SYSTEM
PROCÉDÉ ET SYSTÈME DE DÉTECTION D'HYDROPLANAGE

(30) Priority: 08.12.2022 US 202263386547 P; 27.11.2023 US 202318519736
(43) Date of publication of application: 12.06.2024
(73) Proprietor: The Goodyear Tire & Rubber Company, Akron, OH 44316 (US)
(72) Inventor: DECOSTER, Yves Francois Claude, 6760 Ethe (BE)
(74) Representative: Kutsch, Bernd

(56) References cited:
- EP-B1- 3 727 966
- US-A1- 2011 199 201

## Description

### Field of the Invention

The invention relates generally to tire monitoring systems. More particularly, the invention relates to systems that monitor the radial acceleration of a rolling tire. Specifically, the invention is directed to a system and method for detecting a state of hydroplaning of a tire based on radial acceleration measures of the tire.

### Background of the Invention

When a layer of water builds up between the tires of a driving road vehicle and the ground surface on which the vehicle is driving, the tires may enter a state of hydroplaning, which is also referred to as aquaplaning. In the state of hydroplaning, a loss of traction occurs, which prevents the vehicle from responding to control inputs. If this occurs to all wheels simultaneously, the vehicle becomes an uncontrolled sled, and a hazard to passengers of the vehicle as well as to other road users.

Every vehicle function that changes direction or speed relies on friction between the tires and the road surface. The grooves of a rubber tire are designed to disperse water from beneath the tire, providing high friction even in wet conditions. Hydroplaning occurs when a tire encounters more water than it can dissipate. Water pressure in front of the wheel forces a wedge of water under the leading edge of the tire, causing it to lift from the road. The tire then skates on a sheet of water with little, if any, direct road contact, and loss of control results. Vehicle mounted control systems may detect hydroplaning if a loss of traction is detected. However, at that stage the affected tire is likely already beyond control. The earlier the state of hydroplaning is detected, the more effectively any known countermeasures may take effect, as they may be triggered earlier and ahead of a loss of traction and control.

Therefore, there is a need in the art for a method and system that reliably and quickly detects a state of hydroplaning of a tire, so that a resulting detection signal may be quickly used to trigger vehicle controls that are able to take required countermeasures, or to alert the driver.

US 2011/199201 A describes a method and a system in accordance with the preamble of claim 1and 5, respectively.

### Summary of the Invention

The invention relates to a method in accordance with claim 1 and to a system in accordance with claim 5.

Dependent claims refer to preferred embodiments of the invention.

A computer implemented method for detecting hydroplaning of a tire supporting a vehicle is provided. The method is remarkable in that it comprises obtaining radial acceleration data from a tire-mounted sensor unit, wherein the radial acceleration data provides an indication of the evolution of the tire's radial acceleration while the tire is rolling on a ground surface. The method further comprises a step of generating a hydroplaning detection signal based on the radial acceleration data.

The hydroplaning detection signal indicates a presence of hydroplaning if the obtained radial acceleration data indicates a plurality of values that are lower than a predetermined threshold value within a predetermined amount of time.

The signal may preferably be a binary signal.

The predetermined threshold value is a negative radial acceleration value when the radial axis of the accelerometer is pointing in a radially inward direction, which is to the outside of the tire cavity. When the radial axis is pointing radially outwardly, or in the direction of the center of the wheel, the acceleration values are negative, in which case the aquaplaning detection employs a positive threshold.

The predetermined amount of time may preferably correspond to at least four full revolution periods of the tire.

The step of obtaining radial acceleration data may preferably comprise obtaining samples indicating the tire's radial acceleration at a rate of at least 1 kHz from the tire-mounted sensor unit.

Preferably, the step of obtaining radial acceleration data may comprise storing a history of consecutively obtained sample values of the radial acceleration data in a memory element having a predetermined storage capacity.

The step of generating a hydroplaning signal may preferably comprise indicating the presence of hydroplaning based on an evaluation of a function of the sample values stored in said memory element. The function may comprise an averaging function or a thresholding function.

Also, a computer program comprising computer readable code means is provided, which, when run on a computer, causes the computer to carry out the method according to the invention.

Furthermore, a computer program product is provided, which comprises a computer-readable medium on which the computer program according to the invention is stored.

According to another aspect of the invention, a hydroplaning detection system is provided. The hydroplaning system is remarkable in that it comprises a vehicle, a tire supporting the vehicle, a sensor unit being mounted on the tire, the sensor unit including a radial acceleration sensor to measure radial acceleration data while the tire is rolling on a ground surface, a memory element storing at least part of the acceleration data, and a processor in electronic communication with the sensor unit and with the memory element, the processor being configured to obtain radial acceleration data from the memory element, and to generate a hydroplaning detection signal based on the radial acceleration data.

The sensor unit is preferably attached to an innerliner of the tire.

Preferably, the sensor unit may include a transmitter having an antenna for wireless data transmission to said processor.

The processor may preferably include a transmitter to transmit the hydroplaning detection signal to at least one of a display device or to a vehicle control system.

The sensor unit comprises an accelerometer that is arranged so that an acceleration measuring direction of the accelerometer corresponds to the tire's radial direction.

The sensor unit may preferably be configured to measure samples of the tire's radial acceleration at a rate of at least 1 kHz.

The processor is configured to indicate the presence of hydroplaning in the hydroplaning detection signal if the radial acceleration data indicates a plurality of values that are lower than a predetermined threshold value within a predetermined amount of time.

The memory element may preferably be structured to store a history of consecutively obtained sample values of the radial acceleration data.

Preferably, the memory element may operate as a shift register.

Also, a tire comprising a sensor unit attached to an innerliner of the tire is provided, wherein the sensor unit includes a radial acceleration sensor to measure radial acceleration data while the tire is rolling on a ground surface. The tire further comprises a memory element in electronic communication with the sensor unit, to store at least part of the acceleration data.

The sensor unit may preferably comprise a transmitter having an antenna for wireless data transmission to a processor.

### Definitions

"Axial" and "axially" means lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Equatorial centerplane" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by a shape having adjacent grooves.

### Brief Description of the Drawings

The invention will be described by way of example and with reference to the accompanying drawings in which:
FIG. 1 is a schematic perspective view of a vehicle that includes a tire employing an embodiment of the hydroplaning detection system in accordance with the present invention;
FIG. 2 is a graphical representation of data showing measured radial acceleration of a tire as a function of time, while a tire rolls on the ground without hydroplaning;
FIG. 3 is a graphical representation of data showing measured radial acceleration of a tire as a function of time, while a tire rolls on the ground with building hydroplaning;
FIG. 4 is a schematic diagram illustrating the phenomenon of hydroplaning while a tire rolls on a ground surface covered with water;
FIG. 5 is a workflow illustrating the main steps of an embodiment of the method in accordance with the present invention;
FIG. 6 is a schematic diagram showing aspects of an embodiment of the hydroplaning detection system in accordance with the present invention.

### Detailed Description of Preferred Embodiments of the Invention

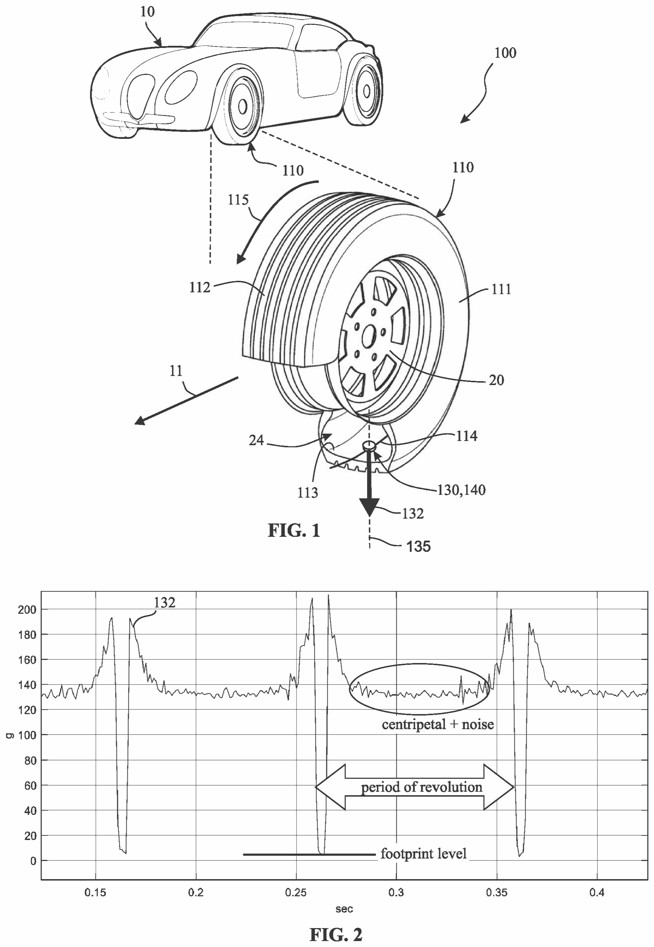

With reference to Figure 1 through 6, an exemplary embodiment of the hydroplaning detection system 100 of the present invention is presented.

The hydroplaning system 100 and accompanying method attempts to overcome challenges posed by prior art methods. The hydroplaning phenomenon is a sudden event and requires a prompt warning, so that indicators of hydroplaning that are easy to obtain and/or quick to be compute are of foremost interest. In accordance with aspects of the invention, the proposed method is based on the minimum radial acceleration level observed using a tire-mounted accelerometer over several last wheel revolutions. It has been observed in experimental data that in a case of hydroplaning, the radial acceleration of an affected tire drops to significant negative values. The physical root cause is the deformation of the crown of the tire in the footprint. The negative acceleration values reflect a noticeable concave deformation of the tire due to the speed and the presence of a front-water wave at the entry of the footprint. Since the water is pressing against the tire at the entry of the footprint, it is pushing the tire envelope so as to deform it with a concave shape. The method that will be described in further details only requires a buffer that keeps, in a minimal configuration, only the history of the minimum measured radial acceleration values observed over a short past period. When such signals drop below a given threshold, a hydroplaning warning can promptly be sent to the vehicle and/or to the vehicle's driver. Data processing is kept low, so as to guarantee quick detection of the state of hydroplaning. Since the aquaplaning occurs at high speeds, one might argue that saturation of the accelerometer might affect the method. However, since the proposed method is based on the minimum acceleration, the sensor saturation is not a problem.

With reference to Figure 1, the system 100 aims at detecting the state of hydroplaning of each tire 110 supporting a vehicle 10 as it drives on a ground surface. While the vehicle 10 is depicted as a passenger car, the invention is not to be so restricted. The principles of the invention find application in other vehicle categories, such as commercial trucks, in which vehicles may be supported by more or fewer tires than those shown in Figure 1.

The tires 110 are of conventional construction, and each tire is mounted on a respective wheel 20 as known to those skilled in the art. Each tire 110 includes a pair of sidewalls 111, of which only one is shown, that extend to a circumferential tread 112, which wears with age from road abrasion. An innerliner 113 is disposed on the inner surface of the tire 110, and when the tire is mounted on the wheel 20, an internal cavity 24 is formed, which is filled with a pressurized fluid, such as air.

A sensor unit 130 is attached to the innerliner 113 of each tire 110 by means such as an adhesive. The sensor unit 130 is preferably attached to the innerliner 113 at an equatorial centerplane or centerline 114 of the tire 110. The sensor unit 130 comprises a sensor such as an accelerometer, which is able to measure acceleration along at least one radial axis 135. Microeletromechanical systems (MEMS) configured as three-axis accelerometers having a sensitivity of -400g to +400g are for example known in the art, although a lower sensitivity is sufficient for the present invention. The sensor unit 130 is mounted on the tire 110 in such a way that at least one of the measuring axis corresponds with a radial direction of the tire. Thereby, the accelerometer is able to measure the radial acceleration 132 of the tire 110 as it rolls at an angular velocity 115, causing the linear movement 11 of the vehicle 10.

The sensor unit 130 also advantageously includes an electronic memory capacity 140 for storing a history of measured radial acceleration values 132. Alternatively, such a memory element 140 is attached separately to the innerliner 113 of the tire 110, in electronic communication with the sensor unit 130. As will be described further on, a processor is configured to read and treat the acceleration data 132 gathered by the sensor unit 130 and stored in the memory element 140.

While Figure 1 shows a single sensor unit 130 mounted on the tire 110, this is to be understood as a minimal configuration. By way of example, multiple equivalent sensor units 130 may be mounted along the circumference of the tire 110, for example at a mutual radial distance of 90° without departing from the scope of the invention.

Figure 2 shows the evolution of measured acceleration values 132 by a system 100 as shown in Figure 1, while the tire 110 is rolling on a ground surface, without the incidence of hydroplaning. It is appreciated that the gathered data 132 provides a periodic signal, the period corresponding to a period of revolution of the tire, which depends on its angular rotation speed, and thus on the linear velocity of the vehicle 10. The depicted signal 132 has been measured at a frequency of 1kHz, but higher sampling frequencies, may provide even better results. As the tire 110 revolves, so does the mounting point of the sensor unit 130. Each data point within on period of revolution is thus gathered at a different position relative to the ground.

When the sensor unit 130 on the tire comes closest to the ground, i.e., when it is in the footprint region of the tire on the ground, the radial acceleration 132 drops to substantially zero for the short time that the corresponding region of the tire tread 112 is translating (pure linear motion) along the surface of the ground. This happens after an initial increase in the acceleration levels due to the deformation to which the tire is subjected during passage from a circumferential to a flat configuration, at the beginning of the contact region between the tire and the ground. It is during the flat region (contact patch, footprint) where the measured acceleration data 132 is lowest and corresponds to the depicted footprint level. A further increase in the acceleration levels is encountered when the tire exits from the contact region at the end of the depicted period of revolution. As soon as the passage in the contact patch terminates, the measured signal 132 indicates the centripetal acceleration of the tire 110, with superimposed noise.

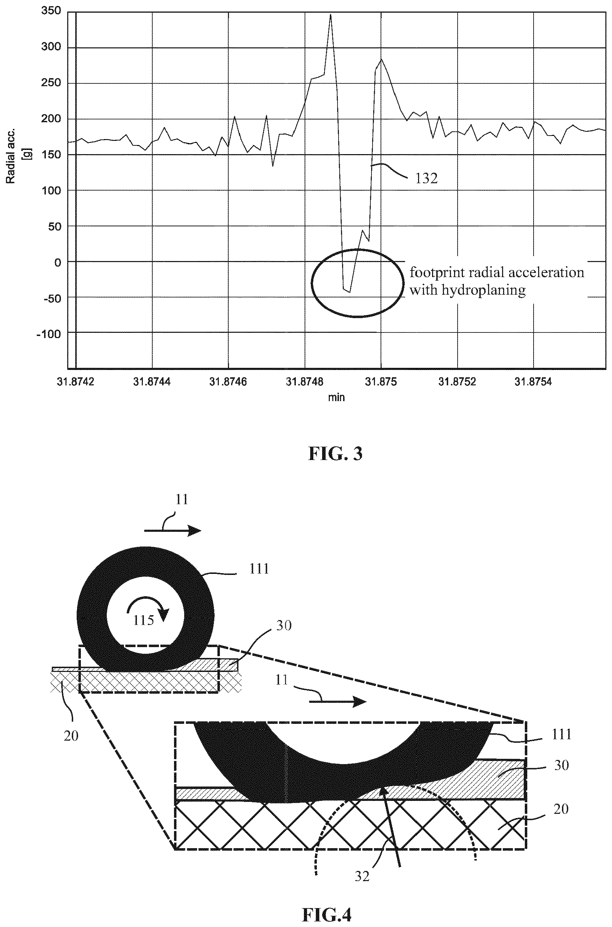

Figure 3 shows the evolution of measured acceleration values 132 by a system 100 as shown in Figure 1, while the tire 110 is rolling on a ground surface covered by water, so that the tire enters a state of hydroplaning.

When the sensor unit 130 on the tire 110 comes closest to the ground, i.e., when it is in the footprint region of the tire on the wet ground surface, substantially negative radial acceleration values 132 are observed in the signal, as indicated by the marker on Figure 3, where the measured acceleration values drop to about -50g, whereas the corresponding values in the case where no water is on the ground surface (see Figure 2) remained positive. Embodiments of the invention exploit this signal feature to detect the occurrence of the state of hydroplaning.

Turning to Figure 4, an explanation of the occurrence of the negative acceleration values is provided. As the tire 110 evolves at a linear velocity 11 while rolling at an angular velocity 115 on a ground surface 20, it enters on a portion of ground surface that is covered by water 30. The front wave caused by the water 30 at the entry of the footprint is pushing toward the tire's envelope, locally causing a concavely shaped deformation of the tire. This pushing towards the center of the tire by the water that wedges between the tire 11 and the ground surface 20 may be modelled by an acceleration component 32 acting against the centripetal acceleration of the tire, which, as previously discussed, is nearly zero in the footprint area of the tire, where the acceleration if mostly linear. Going back to the signal depicted in Figure 3, the resulting values 132 of the footprint's radial acceleration when water is on the ground therefore become negative. These values are picked up by the sensor unit 130 shown in Figure 1. The detection of negative values in the acceleration data 132 therefore provides a robust indication of the presence of hydroplaning, which is available immediately as the tire starts rolling on a sheet of water 30 on the ground surface 20.

Aspects of the proposed hydroplaning detection method that aims at detecting these negative signal values 132 are executed on a processor, which enables input of data from the memory element 140, and which enables execution of specific analysis and algorithms, which are stored in a suitable storage medium and are also in electronic communication with the processor.

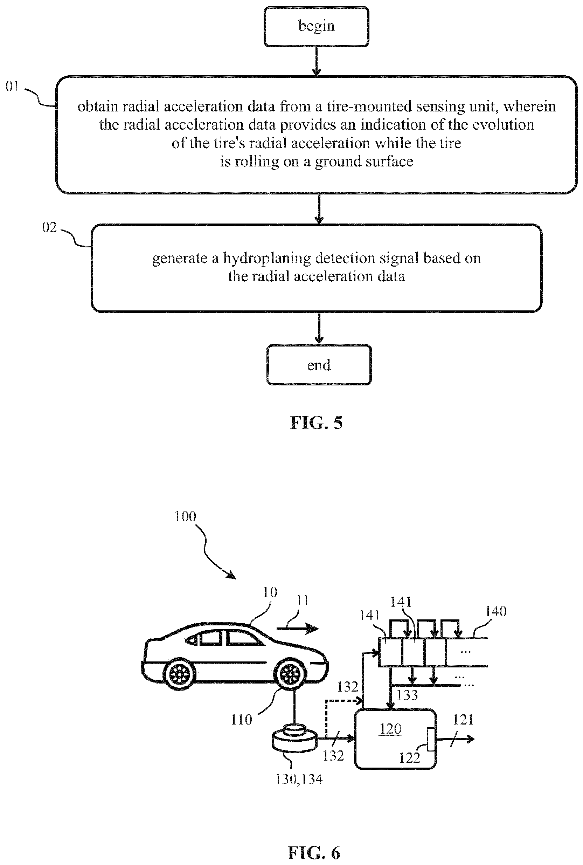

The method steps in accordance with aspects of the invention are described with reference to Figure 5 and Figure 6. The hydroplaning detection system 100 comprises a vehicle 10 supported by tires 110. Each tire 110 is equipped as previously described with at least one sensor unit 130 that measures radial acceleration values as the vehicle evolves at a linear velocity 11 and as the tires 110 roll on a ground surface. The resulting signal values provide an evolution of the tire's radial acceleration as shown in Figure 2 (no hydroplaning) and Figure 3 (hydroplaning) respectively. While the sensor unit may preferably be directly coupled to an electronic memory capacity 140, as indicated by the dashed line in Figure 6, the system may also use a processor 120 that is configured to write the radial acceleration values 132 into the memory element 140. In that case the sensor unit 130 measures acceleration data 132 and transmits them to the processor 120 using a wireless data transmitter 134. In all embodiments, the memory element eventually stores a history of the evolution of the signal radial acceleration values 132. A processor 120 having read access to the memory element is capable of reading out all the acceleration data 132, 133 stored in the memory element 140 at any given time. The step of obtaining radial acceleration data 132, 133 from the tire-mounted sensor unit 130, wherein the radial acceleration data provides an indication of the evolution of the tire's radial acceleration while the tire is rolling on a ground surface corresponds to step 01 in Figure 5.

The memory element 140 is preferably structured either logically or physically as a shift register memory. With each arriving value or sample 132 from the sensor unit 130, all previously stored values are shifted to the right by one memory register 141. While the oldest value (in the right-most register) is lost, the newest sample 132 is stored in the left-most memory register 141. All values 133 are read out in parallel by the processor 120, thereby providing a short-term snapshot of the evolution of the signal 132. Shift registers are well known in the art and may for example by implemented by cascaded and synchronized flip-flop memory elements. Alternatively, a general-purpose memory element such as a solid-state memory element may be configured to provide this function by appropriate software code without further inventive skill.

The memory element 140 has a predetermined storage capacity, for storing the radial acceleration data 133 corresponding to of several tire revolutions. By way of examples, the memory element 140 may store the radial acceleration data 133 covering 3, 4, up to 10 or up to 20 tire revolutions.

At step 02 of Figure 5, the processor 120 generates a hydroplaning detection signal based on the radial acceleration data 132, 133. The hydroplaning detection signal is for example a binary signal indicating either the presence or absence of hydroplaning at any given time. The output signal 121 is transmitted using a transmitter 122 to a control unit of the vehicle 10, which may for example trigger an anti-slippage system, or combine the signal 121 with other available hydroplaning detection signals.

The processor 120 may be provided within the vehicle 10, so that the processor is capable of communicating the signal 121 to a vehicle control unit through the vehicle's CAN bus or other suitable data transmission channels.

In order to detect hydroplaning from the acceleration data 132, 133 the processor is configured to detect negative valued acceleration data 132 in the data corresponding to at least one tire revolution. If negative acceleration data 132 are detected, the signal 121 is switched to indicate the presence of hydroplaning.

In a preferred embodiment, the values 133 covering several tire revolutions are compared by the processor 120 against a predetermined negative threshold value, for example in the range or -10g to -100g. If a predetermined number of values 132 of the overall radial acceleration data 133 are lower-valued than then predetermined threshold value, the signal 121 is switched to indicate the presence of hydroplaning. It is to be understood that the threshold used to detect hydroplaning is negative if the radial axis of the accelerometer is pointing radially inwardly, or to the outside of the tire cavity. If the radial axis is pointing radially outwardly, or in the direction of the center of the wheel, the acceleration values are negative, in which case the aquaplaning detection employs a positive threshold.

In further embodiments, the values 133 may be filtered by the processor 120, for example by denoising or averaging functions, and the detection signal 121 is switched to indicate the presence of hydroplaning based on a result of such a filtering function.

The memory element 140 may in some embodiments store all measured radial acceleration values 132 that correspond to a predetermined number of tire revolutions, including the majority of values that do not correspond to footprint contacting areas. As previously explained, the salient features of the measured radial acceleration signals (see Figure 2 and Figure 3) only occur at specific instants: when the area of tire 110 in which the sensor unit 130 is mounted enters in contact with the ground surface.

Therefore, in some embodiments the values 132 may be pre-filtered prior to storing them in the memory element, so that only radial acceleration values 132 corresponding to contact periods, where hydroplaning is capable of being detected, are stored in the memory element. This may for example be implemented by a pre-thresholding algorithm implemented by the processor 120, which only stores acceleration data 132 that are lower than a predetermined positive threshold (e.g., 50 g or 20 g) in the memory element 140. While the processing of the stored acceleration data 132, 133 remains the same, the required memory capacity is thereby greatly reduced.

The electronic communication may be through a wired connection or wireless communication without affecting the overall concept or operation of the invention. Such wireless communications include radio frequency (RF) and Bluetooth^{®} communications.

## Claims

1. A computer implemented method for detecting hydroplaning of a tire (110) supporting a vehicle (10), the method comprising:
obtaining radial acceleration data (132, 133) from a tire-mounted sensor unit (130), wherein the radial acceleration data (132, 133) provides an indication of the evolution of the tire's radial acceleration while the tire (110) is rolling on a ground surface (20); and
generating a hydroplaning detection signal based on the radial acceleration data (132, 133);
**characterized in that** the hydroplaning detection signal indicates a presence of hydroplaning if the obtained radial acceleration data (132, 133) indicates a plurality of values that are lower than a predetermined threshold value within a predetermined amount of time, wherein the predetermined threshold value is a negative radial acceleration value when a radial axis (135) of the sensor unit (130) is directed in a radially inward direction.

2. The method of claim 1, wherein the predetermined amount of time corresponds to at least four full revolution periods of the tire (110).

3. The method of at least one of the previous claims, wherein the step of obtaining radial acceleration data comprises obtaining samples indicating the tire's radial acceleration at a rate of at least 1 kHz from the tire-mounted sensor unit (130).

4. The method of at least one of the previous claims, wherein the step of obtaining radial acceleration data comprises storing a history of consecutively obtained sample values of the radial acceleration data (132, 133) in a memory element (140) including a predetermined storage capacity, and, optionally, wherein the step of generating a hydroplaning signal comprises indicating the presence of hydroplaning based on an evaluation of a function of the sample values stored in said memory element (140).

5. A hydroplaning detection system comprising:
a vehicle (10);
a tire (110) supporting the vehicle (10);
a sensor unit (130) being mounted on the tire (110), the sensor unit (130) including a radial acceleration sensor to measure radial acceleration data (132, 133) while the tire (110) is rolling on a ground surface (20);
a memory element (140) storing at least part of the acceleration data (132, 133); and
a processor (120) in electronic communication with the sensor unit (130) and with the memory element (140), the processor (120) being configured to obtain radial acceleration data (132, 133) from the memory element (140) and to generate a hydroplaning detection signal based on the radial acceleration data (132, 133);
**characterized in that** the processor (120) is configured to indicate the presence of hydroplaning in the hydroplaning detection signal if the radial acceleration data (132, 133) indicates a plurality of values that are lower than a predetermined threshold value within a predetermined amount of time, wherein the predetermined threshold value is a negative radial acceleration value when a radial axis (135) of the sensor unit (130) is directed in a radially inward direction.

6. The system of claim 5, wherein the sensor unit (130) is attached to an innerliner (113) of the tire (110) proximate a centerline (114) of the tread (112).

7. The system of claim 5 or 6, wherein the sensor unit (130) includes a transmitter (134) including an antenna for wireless data transmission to said processor (120), and/or wherein the processor (120) includes a transmitter (122) to transmit the hydroplaning detection signal to at least one of a display device or to a vehicle control system.

8. The system of at least one of the claims 5 to 7, wherein the sensor unit (130) comprises an accelerometer that is arranged so that an acceleration measuring direction of the accelerometer corresponds to a radial axis (135) of the tire (110), and, optionally, wherein the sensor unit (130) is configured to measure samples of the tire's radial acceleration at a rate of at least 1 kHz.

9. The system of at least one of the claims 5 to 8, wherein the predetermined amount of time corresponds to at least four full revolution periods of the tire (110).

10. The system of at least one of the claims 5 to 9, wherein the memory element (140) is structured to store a history of consecutively obtained sample values of the radial acceleration data (132, 133) and/or wherein the memory element (140) operates as a shift register.

## Patentansprüche

1. Computerimplementiertes Verfahren zum Detektieren von Aquaplaning eines Reifens (110), der ein Fahrzeug (10) trägt; wobei das Verfahren das Folgende umfasst:
das Erzielen von Radialbeschleunigungsdaten (132, 133) aus einer Detektionseinheit (130), die am Reifen angebracht ist; wobei die Radialbeschleunigungsdaten (132, 133) eine Angabe in Bezug auf den Verlauf der Radialbeschleunigung des Reifens liefern, während der Reifen (110) auf einer Bodenoberfläche (20) rollt; und
das Erzeugen eines Aquaplaning-Detektionssignals auf Basis der Radialbeschleunigungsdaten (132, 133);
**dadurch gekennzeichnet, dass** das Aquaplaning-Detektionssignal das Vorliegen von Aquaplaning anzeigt, wenn die erzielten Radialbeschleunigungsdaten (132, 133) innerhalb einer vorbestimmten Zeitspanne eine Vielzahl von Werten angeben, die unter einem vorbestimmten Schwellenwert liegen; wobei der vorbestimmte Schwellenwert einen negativen Radialbeschleunigungswert darstellt, wenn eine Radialachse (135) der Detektionseinheit (130) in einer Richtung ausgerichtet ist, die in der radialen Richtung nach innen weist.

2. Verfahren nach Anspruch 1, wobei die vorbestimmte Zeitspanne mindestens vier vollständigen Umdrehungen des Reifens (110) entspricht.

3. Verfahren nach mindestens einem der vorstehenden Ansprüche, wobei der Schritt, in dem Daten zur Radialbeschleunigung erzielt werden, das Erzielen von Proben aus der an dem Reifen angebrachten Detektionseinheit (130) umfasst, die die Radialbeschleunigung des Reifens mit einer Frequenz von mindestens 1 kHz widerspiegeln.

4. Verfahren nach mindestens einem der vorstehenden Ansprüche, wobei der Schritt, in dem Radialbeschleunigungsdaten erzielt werden, in einem Element in Form eines Speichers, das eine vorbestimmte Speicherkapazität enthält, das Speichern einer Historie von Probenwerten der radialen Beschleunigungsdaten (132, 133) umfasst, die nacheinander erzielt werden; und wobei der Schritt, in dem ein Aquaplaning-Signal erzeugt wird, optional die Angabe des Vorliegens von Aquaplaning auf Basis einer Auswertung einer Funktion der in dem Element in Form eines Speichers (140) gespeicherten Probenwerte umfasst.

5. Aquaplaning-Detektionssystem, das Folgendes umfasst:
ein Fahrzeug (10);
einen Reifen (110), der das Fahrzeug (10) stützt;
eine Detektionseinheit (130), die am Reifen angebracht ist; wobei die Detektionseinheit (130) einen Radialbeschleunigungs-Sensor enthält, der dazu bestimmt ist, Radialbeschleunigungsdaten (132, 133) zu messen, während der Reifen (110) auf einer Bodenoberfläche (20) rollt;
ein Element in Form eines Speichers (140), in dem mindestens ein Teil der Beschleunigungsdaten (132, 133) gespeichert wird; und einen Prozessor (120), der elektronisch mit der Detektionseinheit (130) und dem Speicherelement (140) verbunden ist;
wobei der Prozessor (120) so ausgebildet ist, dass er Radialbeschleunigungsdaten (132, 133) aus dem Element in Form eines Speichers (140) erzielt und auf Basis der Radialbeschleunigungsdaten (132, 133) ein Aquaplaning-Erkennungssignal erzeugt;
**dadurch gekennzeichnet, dass** der Prozessor (120) so ausgebildet ist, dass er eine Angabe zum Vorliegen von Aquaplaning im Aquaplaning-Detektionssignal macht, wenn die Radialbeschleunigungsdaten (132, 133) innerhalb einer vorbestimmten Zeitspanne eine Vielzahl von Werten angeben, die unter einem vorbestimmten Schwellenwert liegen; wobei der vorbestimmte Schwellenwert einen negativen Radialbeschleunigungswert darstellt, wenn eine Radialachse (135) der Detektionseinheit (130) in einer Richtung ausgerichtet ist, die in der radialen Richtung nach innen weist.

6. System nach Anspruch 5, wobei die Detektionseinheit an einer Innenschicht (113) des Reifens (110) in der Nähe einer Mittellinie (114) der Lauffläche (112) befestigt ist.

7. System nach Anspruch 5 oder 6, wobei die Detektionseinheit (130) einen Sender (134) enthält, der eine Antenne zur drahtlosen Übertragung von Daten an den Prozessor (120) enthält; und/oder wobei der Prozessor (120) einen Sender (122) enthält, der dazu bestimmt ist, das Aquaplaning-Erkennungssignal an mindestens ein Element zu senden, das aus einer Anzeigeeinrichtung oder einem Fahrzeug-System ausgewählt ist.

8. System nach mindestens einem der Ansprüche 5 bis 7, wobei die Detektionseinheit (130) einen Beschleunigungsmesser umfasst, der derart ausgelegt ist, dass eine Messrichtung der Beschleunigung einer Radialachse (135) des Reifens (110) entspricht; und wobei die Detektionseinheit (130) optional so ausgestaltet ist, dass sie Messwerte der Radialbeschleunigung des Reifens mit einer Frequenz von mindestens 1 kHz erfasst.

9. System nach mindestens einem der Ansprüche 5 bis 8, wobei die vorbestimmte Zeitspanne mindestens vier vollständigen Umdrehungen des Reifens (110) entspricht.

10. System nach mindestens einem der Ansprüche 5 bis 9, wobei das Element in Form eines Speichers (140) so ausgelegt ist, dass es einen Verlauf von Abtastwerten der nacheinander erzielten Radialbeschleunigungsdaten (132, 133) speichert; und/oder wobei das Element in Form eines Speichers (140) wie ein Schieberegister arbeitet.

## Revendications

1. Procédé mis en œuvre par ordinateur, destiné à détecter un aquaplanage d'un bandage (110) qui supporte un véhicule (10) ; dans lequel le procédé comprend le fait de :
obtenir des données d'accélération radiale (132, 133) à partir d'une unité de détection (130) qui est montée sur le bandage ; dans lequel les données d'accélération radiale (132, 133) fournissent une indication qui concerne l'évolution de l'accélération radiale du bandage alors que le bandage (110) est en train de rouler sur une surface de sol (20) ; et
générer un signal de détection d'aquaplanage en se basant sur les données d'accélération radiale (132, 133) ;
**caractérisé en ce que** le signal de détection d'aquaplanage témoigne de la présence d'un aquaplanage lorsque les données d'accélération radiale (132, 133) qui ont été obtenues indiquent une pluralité de valeurs qui sont inférieures à une valeur seuil qui a été prédéterminée au sein d'un laps de temps qui a été prédéterminé ; dans lequel la valeur seuil qui a été prédéterminée représente une valeur d'accélération radiale négative lorsqu'un axe radial (135) de l'unité de détection (130) est orienté dans une direction dirigée vers l'intérieur dans la direction radiale.

2. Procédé selon la revendication 1, dans lequel le laps de temps qui a été prédéterminé correspond à au moins quatre périodes de révolution complète du bandage (110).

3. Procédé selon au moins une des revendications précédentes, dans lequel l'étape, au cours de laquelle on obtient des données d'accélération radiale, comprend le fait d'obtenir des échantillons qui reflètent l'accélération radiale du bandage à une fréquence d'au moins 1 kHz à partir de l'unité de détection (130) qui est montée sur le bandage.

4. Procédé selon au moins une des revendications précédentes, dans lequel l'étape, au cours de laquelle on obtient des données d'accélération radiale, comprend le fait de stocker, dans un élément (140) faisant office de mémoire qui englobe une capacité de mémoire qui a été prédéterminée, un historique de valeurs échantillons des données d'accélération radiale (132, 133), que l'on obtient de manière consécutive ; et dans lequel, de manière facultative, l'étape, au cours de laquelle on génère un signal d'aquaplanage, comprend le fait d'indiquer la présence d'aquaplanage en se basant sur une évaluation d'une fonction des valeurs échantillons qui ont été stockées dans ledit élément (140) faisant office de mémoire.

5. Système de détection d'aquaplanage, qui comprend :
un véhicule (10) ;
un bandage (110) qui supporte le véhicule (10) ;
une unité de détection (130) qui est montée sur le bandage ; dans lequel l'unité de détection (130) englobe un capteur de l'accélération radiale, qui est destiné à mesurer des données d'accélération radiale (132, 133), alors que le bandage (110) est en train de rouler sur une surface de sol (20) ;
un élément (140) faisant office de mémoire dans lequel on stocke au moins une partie des données d'accélération (132, 133) ; et
un processeur (120) qui est mis en communication par voie électronique avec l'unité de détection (130) et avec l'élément (140) faisant office de mémoire ; dans lequel le processeur (120) est configuré pour obtenir des données d'accélération radiale (132, 133) à partir de l'élément (140) faisant office de mémoire et pour générer un signal de détection d'aquaplanage en se basant sur les données d'accélération radiale (132, 133) ;
**caractérisé en ce que** le processeur (120) est configuré pour indiquer la présence d'aquaplanage dans le signal de détection d'aquaplanage lorsque les données d'accélération radiale (132, 133) indiquent une pluralité de valeurs qui sont inférieures à une valeur seuil qui a été prédéterminée au sein d'un laps de temps qui a été prédéterminé ; dans lequel la valeur seuil qui a été prédéterminée représente une valeur d'accélération radiale négative lorsqu'un axe radial (135) de l'unité de détection (130) est orienté dans une direction dirigée vers l'intérieur dans la direction radiale.

6. Système selon la revendication 5, dans lequel l'unité de détection est fixée à un calandrage intérieur (113) du bandage (110) à proximité d'une ligne médiane (114) de la bande de roulement (112).

7. Système selon la revendication 5 ou 6, dans lequel l'unité de détection (130) englobe un transmetteur (134) qui englobe une antenne destinée à la transmission sans fil de données audit processeur (120) ; et/ou dans lequel le processeur (120) englobe un transmetteur (122) destiné à transmettre le signal de détection d'aquaplanage à au moins un élément qui est choisi parmi un dispositif d'affichage ou un système de commande du véhicule.

8. Système selon au moins une des revendications 5 à 7, dans lequel l'unité de détection (130) comprend un accéléromètre qui est conçu d'une manière telle qu'une direction de mesure de l'accélération correspond à un axe radial (135) du bandage (110) ; et dans lequel, de manière facultative l'unité de détection (130) est configurée d'une manière telle qu'elle mesure des échantillons de l'accélération radiale du bandage à une fréquence d'au moins 1 kHz.

9. Système selon au moins une des revendications 5 à 8, dans lequel le laps de temps qui a été prédéterminé correspond à au moins quatre périodes de révolution complète du bandage (110).

10. Système selon au moins une des revendications 5 à 9, dans lequel l'élément (140) faisant office de mémoire est structuré pour stocker un historique de valeurs échantillons des données d'accélération radiale (132, 133) que l'on obtient de manière consécutive ; et/ou dans lequel l'élément (140) faisant office de mémoire fonctionne à la manière d'un registre à décalage.
